# EUROPEAN PATENT SPECIFICATION

(11) **EP 1 547 461 B1**
(45) Date of publication and mention of the grant of the patent: **12.12.2007**
(21) Application number: 03750740.7
(22) Date of filing: 29.09.2003
(51) Int. Cl.: A01G 25/02

(54) **SELF-COMPENSATING DRIP IRRIGATION EMITTER COMPRISING A UNIDIRECTIONAL FLOW DEVICE**
TROPFENBEWÄSSERUNGSEINRICHTUNG MIT DRUCKAUSGLEICH UND UNIDIREKTIONALER STRÖMUNGSVORRICHTUNG
EMETTEUR A AUTO-COMPENSATION D'IRRIGATION PAR EGOUTTEMENT, AVEC DISPOSITIF A FLUX UNIDIRECTIONNEL

(30) Priority: 02.10.2002 ES 200202242
(43) Date of publication of application: 29.06.2005
(73) Proprietor: Irrimon, S.A.U., 46550 Albuixech (Valencia) (ES)
(72) Inventor: DUART MARI, Juan, 46550 ALBUIXECH (Valencia) (ES)
(74) Representative: Carpintero Lopez, Francisco
(86) International application number: PCT/ES2003/000491
(87) International publication number: WO 2004/034772

(56) References cited:
- WO-A-01/64019
- WO-A-96/24243
- WO-A-98/10635
- WO-A-02/085101
- US-A- 2002 070 297

## Description

### OBJECT OF THE INVENTION

The object to which the invention refers that is protected in this Patent consists of a "Self-compensating drip emitter, with a one-way flow device" as claimed in claim 1, i.e. inside which the direction of the water circulation cannot be reversed because it would become a suction system instead of an emitter.

### BACKGROUND OF THE INVENTION

Self-compensating drippers are already known, in which the outlet section varies in inverse proportion to the variations in pressure, with the result that the irrigation flow is kept practically constant. This is achieved by means of the use of a peripheral elastic membrane which withstands the pressure of the water in the pipe in which the dripper is inserted on its outer face, while a small pressure is exerted on its inner face, adjoining the outlet orifice, by the flow of the liquid along a labyrinth, which gives rise to a loss of head.

With this arrangement, if the pressure in the pipe is relatively high at the point where the dripper is inserted, the membrane moves closer to the outlet orifice, reducing the supply chamber and the delivery flow, while acting inversely if the pressure in the pipe is relatively low.

Said drippers are usually inside elastic pipes in an underground run, a system that offers numerous advantages, such as the absence of losses due to runoff and evaporation, prevention of fungal infections in plants, but, above all, suitable localization of the supply of water at the place where it is needed, alongside the absorbing roots. Thus, a wet bulb is successfully formed, utilizable in its whole volume, and not as in surface drip systems, in which the volume of water that is discharged near the surface is not utilized by the plant, as its root system is much lower down.

This system, however, also presents a problem: the obstruction of the drippers, when the direction of flow of the water is reversed due to a change in pressure in the pipes, so that negative pressure and suction are thereby created, which, as the dripper is buried, causes earth to enter and makes it unserviceable.

To overcome this problem, the company which is also the holder of the Spanish Patent ES-2139498, filed said patent application, wherein the suction of particles of earth that could take place due to the negative pressure created in the pipe after the water supply is cut off is effectively surmounted thanks to a moving ball built into the emitter, which acts as a "non-return valve".

A drip irrigation emitter of the state of the art is described in the international patent publication WO 01/64019.

### DESCRIPTION OF THE INVENTION

The purpose of the invention which represents the object of this Patent consists of contributing improvements to the means of sealing the water emitter outlet, when negative pressures are created in the pipe in which it is housed by means of the features claimed in claim 1.

To this end, the nature, form and arrangement of this known sealing means has been modified, improving its function features and transforming the emitter into one that is essentially different

In fact, the essence of the invention consists of the replacement of the known anti-suction ball valve with a circular membrane of an elastomer material which is deformed as the pressure builds up in the pipe until it lifts off its seat at the time of the start of irrigation, so that the water runs out freely.

When, as a result of irregularities in the ground being irrigated or negative pressures in the pipes, i.e., when the external pressure is higher than the internal, a reverse flow is generated in conventional emitters not provided with an anti-suction valve, which draws in mud, algae and substances in suspension in the wet bulb into the pipe by way of the emitter. These substances may prevent the proper working of the emitter unit or even permanently block its water through flow sections.

The main aim of the anti-suction device is to prevent reflux towards the inside of the dripper and maintain one-way flow towards the exterior of the water stream as the only direction possible.

To obtain this result at the outlet of the emitter unit, the compensated water outlet section is provided with a moving seal consisting of a diaphragm of an elastomer material, which, when positioned in its respective housing and depending on the direction of the flow, can be moved with sufficient excursion, from the compensated water outlet orifice to the area of the next stop.

The dripper outlet orifice is provided with a support fillet in its outer circular perimeter that assures a watertight seal in a bi-stable union with the membrane.

The bi-stability of the elastic seal depends on the direction of the flow of fluid oppressing it, acting according to one of the two possible alternatives:
a) When the internal pressure of the flow in the pipe is higher than the external pressure (usually atmospheric), the seal moves away from the sealing fillet in the direction of the second stop consisting of retaining tabs. The water, which runs through a generously sized section between the outlet orifice and the surface of the diaphragm continues its flow over the outer surface of the emitter and the inner surface of the pipe, to which it is securely welded and is finally discharged to the exterior through a hole perforated for this purpose in the emitter pipe.
b) When, in the opposite case, the external pressure is higher than the internal pressure, as flow would be generated to the interior of the emitter; but at the same time, and forced by the external pressure, the sealing diaphragm is moved from its opening position to its sealing position, resting on and being pressed down against the seating fillet of the dripper outlet orifice, thereby preventing the entry of water and of dangerous particles in suspension.

The structure of the emitter claimed, whose operation has been described above, is made up of the following components:
- A conventional self-compensating dripper inserted or installed in an emitter pipe, with its self-compensating diaphragm, which facilitates the regulation of the flow in its chamber and its discharge to the non-return area, from which the flow runs towards the pipe outlet or discharge orifice.
- A conventional cover that acts as a filter for the flow of water through its narrow windows and as a support for the self-compensating diaphragm.
- A circular membrane of an elastomer material which acts as a sealing diaphragm, resting on a watertight sealing fillet when the internal pressure in the pipe is lower than the external pressure, whereas it lifts off this seat and rests on a second stop consisting of various retaining tabs when the internal pressure in the pipe is higher than the external pressure.

### DESCRIPTION OF THE DRAWINGS

To supplement the description of the invention and facilitate the interpretation of the formal, structural and functional features of its object, drawings are attached representing diagrammatically different aspects of a preferred embodiment of the "Self-compensating drip emitter, with a one-way flow device" which is the object of this Patent. In said drawings:

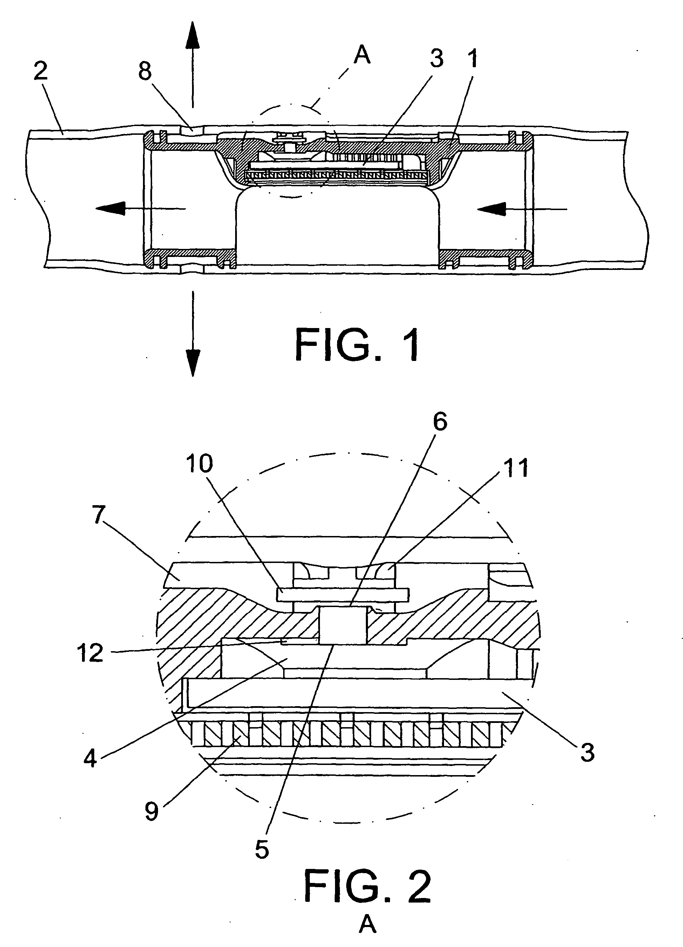

Figure 1.- It is a cross section of the emitter claimed, cut through a plane that passes along its longitudinal axis of symmetry and divides it into two equal symmetrical parts.
Figure 2.- It is an enlargement of detail "A" in Figure 1.

In these two figures the emitter is shown out of service, with the two membranes (the self-compensating and the sealing diaphragm) at rest.

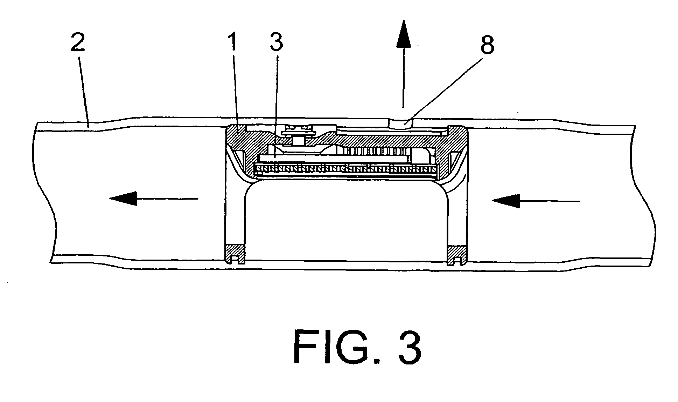

Figure 3.- It represents, in a symmetrical longitudinal section, a possible solely formal version of the emitter, in which its end areas have been simplified with regard to the corresponding formal features of the emitter represented in Figure 1.

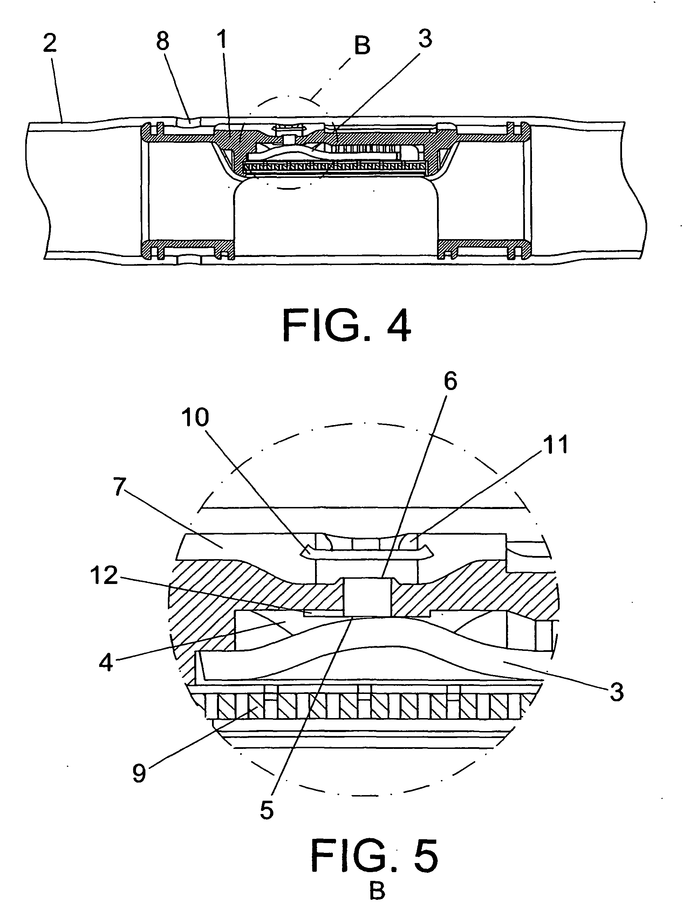

Figure 4.- It represents the emitter claimed, in a symmetrical longitudinal section, showing the position of the membranes when the internal pressure in the pipe is greater than the external. In this situation the self-compensating membrane is pressing on the regulating groove that connects up with the dripper outlet passage, performing its flow regulating function. The sealing diaphragm is moved to its open position against the tab stop, permitting circulation and the discharge of the water stream.
Figure 5.- It is an enlargement of detail "B" of Figure 4.

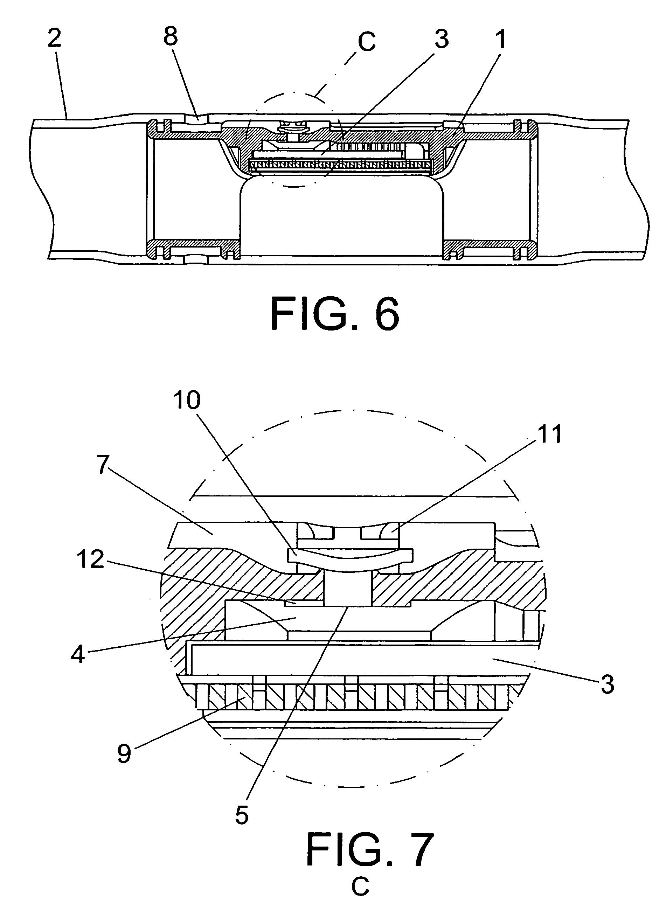

Figure 6.- It represents the emitter claimed, in a symmetrical longitudinal section, showing the position of the membranes when the internal pressure in the pipe is lower than the external pressure, which would give rise to the reversal of the circulating direction of the flow, with the detrimental consequences described, to obviate which the circular membrane blocks the flow of water and thereby prevents suction.
Figure 7.- It is an enlargement of detail "C" of Figure 6.

### PREFERRED EMBODIMENT OF THE DESCRIPTION

To show clearly the nature and scope of the advantageous application of the "Self-compensating drip emitter, with a one-way flow device" which constitutes the object of the invention claimed, its operation and structure are described below, making reference to the drawings which, through representing a preferred embodiment of said object, for purely informative purposes, should be considered in their broadest sense and not as limiting the application and the content of the invention claimed.

The emitter claimed has a built-in discoid membrane (10) acting as a non-return valve, which fulfils its specific function when the external pressure is greater than the internal pressure in the emitter pipe, thereby preventing the entry of water into the dripper by suction.

When the internal pressure is greater than the external pressure, the water passes through the filtering windows in the filter cover (9), exerting an even pressure on the self-compensating membrane (3), traverses the turbulence ducts and reaches the regulation chamber (4).

Final regulation and stabilization of the flow takes place in this chamber in accordance with the pressure of the water under the action of the self-compensating membrane (3), which presses on the regulating groove (12). The flow stabilized at a given delivery rate passes through the passage (5), the sealing diaphragm (10) and, via the outlet ducts (7) reaches the cylindrical outlets areas where the pipe (2) discharge orifices (8) are located.

When the external pressure is greater than the internal pressure in the pipe, to prevent the flow from being reversed, the sealing diaphragm (10) is compressed against its flat seat, impeding the entry of water and particles in suspension from the exterior to the dripper.

The structure of the emitter claimed, the operation of which has been described above, is made up of the following components:
- A conventional self-compensating dripper (1), inserted or installed in an emitter pipe (2), with its self-compensating membrane (3)that facilitates the regulation of the flow rate in the chamber (4) and its outlet along the passage (5) to the non-return area (6), from which the flow circulates along the duct (7) to the pipe (2) outlet or discharge orifice (8).
- A conventional cover (9) that acts as a filter for the flow of water through its narrow windows and as a support for the self-compensating membrane (3).
- A circular membrane (10), of an elastomer material, which acts as a sealing diaphragm, resting on a watertight seating fillet when the internal pressure in the pipe (2) is lower than the external pressure, while it lifts off said seat and rests on a second stop (11) consisting of various retaining tabs when the internal pressure in the pipe (2) is greater than the external pressure.

## Claims

1. Drip irrigation emitter with an anti-suction device, of the type used in emitter pipes, the structure of which comprises: a conventional self-compensating dripper (1), inserted or installed in an emitter pipe (2), with its self-compensating membrane (3) that facilitates the regulation of the flow rate in the chamber (4) and its outlet via the passage (5) to the non-return area (6), from which the flow circulates along the duct (7) to the outlet or discharge orifice (8) in the pipe (2); a conventional cover (9) that acts as a filter for the flow of water through its narrow windows and as a support for the self-compensating membrane (3), wherein the irrigation emitter further comprises a circular membrane (10), of an elastomer material, which acts as a sealing diaphragm, resting on a watertight seating fillet when the internal pressure in the pipe (2) is lower than the external pressure, while it lifts off said seat and rests on a second stop (11), when the internal pressure in the pipe (2) is greater than the external pressure **characterised in that** said second stop (11) consist of various retaining tabs.

## Patentansprüche

1. Tropfenbewässerungs-Ausgabeeinrichtung mit einer Antisaugvorrichtung, wobei die Tropfenbewässerungs-Ausgabeeinrichtung dem bei Ausgaberohren verwendeten Typ zugehört und ihre Struktur aufweist: eine herkömmliche selbstausgleichende Tropfvorrichtung (1), die in ein Ausgaberohr (2) eingesetzt oder in diesem installiert ist, wobei eine selbstausgleichende Membran (3) der Tropfvorrichtung die Regelung der Strömungsrate in der Kammer (4) und das Auslassen der Strömung über den Durchlass (5) in den Rückflusssperrbereich (6) erleichtert, aus dem die Strömung entlang des Dukts (7) zu der in dem Rohr (2) ausgebildeten Auslass- oder Ausgabeöffnung (8) umläuft; eine herkömmliche Abdeckung (9), die als Filter für den Wasserstrom durch ihre engen Fenster und als Halterung für die selbstausgleichende Membran (3) wirkt, wobei die Tropfenbewässerungs-Ausgabeeinrichtung ferner eine kreisförmige Membran (10) aus einem elastomeren Material aufweist, die als Dichtmembran wirkt und die auf einem wasserdichten Auflagebereich ruht, wenn der Innendruck in dem Rohr (2) niedriger als der Außendruck ist, während die Membran von dem genannten Sitz abgehoben wird und in Anlage an einem zweiten Anschlagbereich (11) gelangt, wenn der Innendruck in dem Rohr (2) höher als der Außendruck ist,
**dadurch gekennzeichnet, dass** der zweite Anschlagbereich (11) mehrere Rückhaltevorsprünge aufweist.

## Revendications

1. Goutteur pour irrigation goutte à goutte avec un dispositif anti-aspiration, du type utilisé dans les tuyaux de goutteur, la structure duquel comprenant : un goutteur auto-compensateur conventionnel (1), inséré ou installé dans un tuyau de goutteur (2), avec sa membrane auto-compensatrice (3) qui facilite la régulation du débit dans la chambre (4) et sa sortie via le passage (5) vers la zone de non-retour (6), à partir de laquelle le flux circule le long de la canalisation (7) vers la sortie ou orifice de décharge (8) dans le tuyau (2) ; un couvercle conventionnel (9) qui agit comme un filtre pour le flux d'eau au travers de sa fenêtre étroite et comme un support pour la membrane auto-compensatrice (3) dans lequel le goutteur d'irrigation comprend en outre une membrane circulaire (10) en un matériau élastomère, qui agit comme un diaphragme d'étenchéification, s'appuyant sur un filet de siège étanche à l'eau lorsque la pression interne dans le tuyau (2) est plus basse que la pression externe, tandis qu'il se décolle dudit siège et s'appuie sur un second arrêt (11) lorsque la pression interne dans le tuyau (2) est plus importante que la pression externe
**caractérisé en ce que** ledit second arrêt (11) consiste en diverses pattes de retenue.
